# EUROPÄISCHE PATENTSCHRIFT

(11) **EP 4 264 488 B1**
(45) Veröffentlichungstag und Bekanntmachung des Hinweises auf die Patenterteilung: **18.06.2025**
(21) Anmeldenummer: 21840446.5
(22) Anmeldetag: 15.12.2021
(51) Int. Cl.: G06K 19/063, G06K 19/077

(54) **VERFAHREN ZUR HERSTELLUNG EINES KARTENKÖRPERS, KARTENKÖRPER FÜR EINE CHIPKARTE UND CHIPKARTE**
METHOD FOR PRODUCING A CARD BODY, CARD BODY FOR A CHIP CARD, AND CHIP CARD
PROCÉDÉ DE PRODUCTION D'UN CORPS DE CARTE, CORPS DE CARTE POUR UNE CARTE À PUCE, ET CARTE À PUCE

(30) Priorität: 18.12.2020 DE 102020007784
(43) Veröffentlichungstag der Anmeldung: 25.10.2023
(73) Patentinhaber: Giesecke+Devrient ePayments GmbH, 81677 München (DE)
(72) Erfinder: BALDISCHWEILER, Michael, 81825 München (DE)
(74) Vertreter: Giesecke+Devrient IP
(86) Internationale Anmeldenummer: PCT/EP2021/025501
(87) Internationale Veröffentlichungsnummer: WO 2022/128159

(56) Entgegenhaltungen:
- EP-A2- 0 817 116
- US-A1- 2019 156 073
- US-A1- 2020 364 527

## Beschreibung

Die Erfindung betrifft ein Verfahren zur Herstellung eines Kartenkörpers für eine Chipkarte, einen Kartenkörper für eine Chipkarte sowie eine Chipkarte umfassend einen Kartenkörper.

Es werden Kartenkörper mit einem metallischen Kern in Form einer metallischen Kernschicht oder eines metallischen Kernelements betrachtet, sowie Karten mit Dual Interface (DI)-Funktionalität, bei dem der Kartenkörper zum Teil oder vollständig aus Metall besteht. Die Energiekopplung von DI-Systemen mit einem Zwei-Spulensystem erfolgt durch Metallaufbauten mit einem Schlitz, bei dem der Magnet-/ Stromfluss in den Metallflächen umgeleitet wird. Auf diese Weise verhindert der Schlitz einen Kurzschlussstrom.

Das Chipmodul wird in eine Kavität oder Modulöffnung des Kartenkörpers eingesetzt.

Die Funktionsweise einer solchen Karte besteht darin, dass ein Chipmodul verwendet wird, das selbst eine Spule enthält (Coil On Module). Diese Spule koppelt auf den metallischen Kartenkörper. Diese Kopplung funktioniert nur dann, wenn im Metallkartenkörper der Schlitz vorhanden ist.

Der Schlitz hat jedoch zur Folge, dass die Karte in diesem Bereich instabil wird. Da der Schnitt bis zu der Modulöffnung reicht, kann es auch zu Beschädigungen des Moduls zum Beispiel durch Scherkräfte kommen.

Grundsätzlicher Nachteil des Schlitzes ist nicht nur die Instabilität zu der Modulöffnung hin, sondern es ist auch die Eigenschaft, dass die Kunststofffolien, mit denen die metallischen Kartenkerne üblicherweise beschichtet werden, beim Laminieren in dem Bereich des Schlitzes einsacken. Dies führt zu einer beeinträchtigten Optik.

Auch die Variante der Kartenherstellung, bei der die metallische Schicht nicht mit Kunststofffolien abgedeckt, sondern lediglich mit einem Schutzlack abgedeckt wird, lässt den Schlitz deutlich erkennen, so dass die Optik beeinträchtigt ist.

Die US 2020/364527 A1 beschreibt eine Transaktionskarte, die einen Kartenkörper mit einem Schlitz umfasst. Ein erster Abschnitt des Schlitzes ist in einem ersten Winkel ausgebildet, und ein dritter Abschnitt des Schlitzes ist in einem dritten Winkel ausgebildet. Ein Kartenkörper kann hergestellt werden, indem der Kartenkörper in einem ersten Winkel in Bezug auf eine Schneidvorrichtung positioniert wird und ein erster Abschnitt eines Schlitzes im ersten Winkel erzeugt wird, mindestens indem der Kartenkörper über die Schneidvorrichtung bewegt wird oder indem die Schneidvorrichtung über diesen bewegt wird, Beenden des Bewegens des Kartenkörpers, Drehen des Kartenkörpers um einen dritten Winkel, um einen zweiten Teil des Schlitzes zu erzeugen; und Erzeugen eines dritten Abschnitts des Schlitzes im dritten Winkel durch zumindest ein Bewegen des Kartenkörpers über die Schneidvorrichtung oder ein Bewegen des Schneiders über den Kartenkörper.

Die US 2019/156073 A1 beschreibt Smartcards mit (i) einem Metallkartenkörper (MCB) mit einem Schlitz (S), der eine Modulantenne (MA) eines Chipmoduls (TCM) überlappt, oder (ii) mehreren Metallschichten (M1, M2, M3), die jeweils einen Schlitz (S1, S2, S3) zueinander versetzt oder unterschiedlich ausgerichtet aufweisen. Eine vordere Metallschicht kann durchgehend sein und kann durch eine Abschirmschicht (SL) von darunter liegenden Metallschichten abgeschirmt sein.

Aufgabe der vorliegenden Erfindung ist es daher, die Stabilität des Kartenkörpers und der Chipkarte im Bereich des Schlitzes zu verbessern.

Diese Aufgabe wird durch ein Verfahren zur Herstellung eines Kartenkörpers für eine Chipkarte, einen Kartenkörper für eine Chipkarte sowie eine Chipkarte umfassend einen Kartenkörper gemäß den unabhängigen Patentansprüchen gelöst. Ausgestaltungen und Weiterbildungen der Erfindung sind in den abhängigen Ansprüchen angegeben.

Ein erfindungsgemäßes Verfahren zur Herstellung eines Kartenkörpers für eine Chipkarte umfasst die Schritte:
- Bereitstellen eines metallischen Grundkörpers mit zwei gegenüberliegenden Hauptflächen und einer die beiden Hauptflächen verbindenden, umlaufenden Umfangsfläche, wobei in dem Grundkörper eine Modulöffnung zum Aufnehmen eines Chipmoduls bereits erzeugt ist oder in einer Modulöffnungszone noch erzeugt wird, und
- Erzeugen eines Schlitzes auf der Umfangsfläche zwischen den beiden Hauptflächen, wobei der Schlitz von der Umfangsfläche bis zu der Modulöffnung oder bis zu der Modulöffnungszone ausgebildet wird, und wobei ein Eintrittswinkel des Schlitzes zumindest in eine der beiden Hauptflächen ungleich neunzig Grad zu der Hauptfläche ist.

Ein Grundgedanke der vorliegenden Erfindung besteht darin, dass der Schlitz in dem metallischen Grundkörper nicht mehr senkrecht zu der Hauptfläche ausgebildet wird, sondern in einem zu 90° unterschiedlichen Winkel. Anders ausgedrückt verläuft der Schlitz oder zumindest ein Eintrittsbereich des Schlitzes an der Hauptfläche schräg zu der Hauptfläche. Dies führt zu einer Überlappung von durch den Schlitz getrennten Bereichen des metallischen Grundkörpers in einer Richtung senkrecht zu den Hauptflächen. Durch diese Überlappung kann eine Scherbewegung zumindest in eine Richtung unterbunden werden.

Mit dem hier vorgeschlagenen Schlitz wird zum einen der Kartenkörper hinsichtlich Scherung stabilisiert. Zudem ergibt sich der Vorteil, dass die Deckfolien zum Beispiel aus Kunststoff nicht mehr so sehr in den Bereich des Schlitzes einsacken können, da der schräge Eintritt des Schlitzes einer solchen Folie Unterstützung bietet. Zudem kann nun der Schlitz mit einem Kleber oder einem anderen Material aufgefüllt werden, da der schräg verlaufende Schlitz ein Herauslaufen des Klebers oder des Materials verhindert oder zumindest deutlich reduziert.

Der hier vorgeschlagene Schlitz hat somit den Vorteil, dass durch die schräggestellte Ausführung des Schlitzes die mechanische oder strukturelle Stabilität des Kartenkörpers verbessert und auch ein Einsacken der Folie in den Schlitz verhindert oder zumindest deutlich verbessert wird. Ein weiterer Vorteil ist, dass bei dieser Bearbeitung von der Stirnfläche aus weniger Späne vom Ausschneiden der Karte aus dem Vollmaterial als auch bei der Einbringung der Modulöffnung sich in dem Schlitz einlagern können.

Als Eintrittswinkel des Schlitzes in den metallischen Grundkörper wird hier der Winkel des Schlitzes zu der Hauptfläche verstanden. Dieser Winkel kann auch als Austrittswinkel bezeichnet werden, da dieser Winkel keiner Funktionalität im Hinblick auf einen Ein- oder Austritt unterliegt.

Bei der Erzeugung des Schlitzes kann vorgesehen sein, dass die Hauptachse des Werkzeugs, mit dem der Schlitz erzeugt wird, parallel zu den Hauptflächen ausgerichtet ist und der Schlitz beginnend an der Umfangsfläche in Richtung und bis hin zur Modulöffnung (oder zur entsprechenden Zone für die Modulöffnung) erzeugt wird. So kann zum Beispiel ein Fräser oder Laser zur Erstellung des Schlitzes senkrecht zur Umfangsfläche arbeiten oder ausgerichtet sein und sich von der Umfangsfläche aus in den metallischen Grundkörper hineinarbeiten.

Es kann vorgesehen sein, dass der Schlitz durch einen Verzahnungsschnitt geformt wird, der eine Überlappung zwischen zwei gegenüberliegenden Wänden des Schlitzes vorsieht. Unter einem Verzahnungsschnitt wird ein Schnitt verstanden, bei dem eine oder mehrere solcher Überlappungen entlang des Verlaufs des Schlitzes vorhanden sind. Diese Überlappung oder Überlappungen verhindern ein Scheren oder Verbiegen des Kartenkörpers in eine oder mehrere Richtungen. Die beiden Hauptrichtungen, in denen ein Scheren oder Verbiegen verhindert werden soll, sind die beiden Normalvektoren auf die beiden Hauptflächen. Eine oder mehrere Verzahnungen in dem Schnitt werden durch Richtungsänderungen bei der Erstellung des Schnitts erreicht. Das heißt, wenn ein Fräser oder Laser zur Erstellung des Schlitzes senkrecht zur Umfangsfläche ausgerichtet ist, dann kann er bei unveränderter Ausrichtung nach und nach von einer Hauptfläche zur anderen Hauptfläche verlagert werden und dabei die Richtungsänderungen durchlaufen, um so die Verzahnung oder Verzahnungen zu erzeugen.

Es kann ferner vorgesehen sein, dass der Schlitz mit einem Laser geschnitten wird und dass vorzugsweise der Fokus des Lasers mit zunehmender Schnitttiefe nachjustiert wird. So kann der Fokus des Lasers immer auf dem Schneidpunkt liegen und ein optimaler Materialabtrag erfolgen. Statt eines Lasers kann zum Beispiel auch Wasserstrahlschneiden oder eine Fräsmaschine verwendet werden.

Es kann vorgesehen sein, dass zumindest ein Bereich des Schlitzes bogenförmig ausgebildet wird, so dass eine erste Wand des Schlitzes einen konkaven Bereich aufweist und eine gegenüberliegende zweite Wand des Schlitzes einen konvexen Bereich aufweist, wobei der konvexe Bereich in den konkaven Bereich eingreift. Entlang des Schlitzes von einer Hauptfläche zu der zweiten Hauptfläche können auch mehrere konkave Bereiche und entsprechende konvexe Bereiche ausgebildet sein. Mit einem derartigen kurvenförmigen Verlauf des Schlitzes kann eine Scherung des Kartenkörpers und damit der Chipkarte in beide Hauptrichtungen wirkungsvoll unterbunden oder begrenzt werden. Insbesondere ein rundes oder bogenförmiges Erstellen des Schlitzes minimiert die Bildung von Graten in dem Schlitz.

Es kann ferner vorgesehen sein, dass bei dem Erzeugen des Schlitzes ein Richtungswechsel derart vorgenommen wird, dass der Schlitz zwischen den beiden Hauptflächen keilförmig ausgebildet wird. Wie erwähnt kann mit einer keilförmigen Form des Schlitzes eine Scherung des Kartenkörpers und damit der Chipkarte in beide Hauptrichtungen wirkungsvoll unterbunden oder begrenzt werden. An dem Punkt der Keilspitze kann dann bei der Erstellung des Schlitzes der Richtungswechsel zum Beispiel eines Lasers erfolgen.

Es kann vorgesehen sein, dass jeweils eine Kunststoffschicht mittels eines Klebers auf die Hauptflächen aufgebracht wird, wobei der Schlitz zumindest teilweise mit dem Kleber gefüllt wird. Die Kunststoffschichten können zum Beispiel bereits mit dem Kleber bedeckt sein, wenn sie auf die Hauptflächen aufgebracht werden. Der noch flüssige oder viskose Kleber läuft dann in den schräg ausgebildeten Schlitz hinein. Bedingt durch die Schräge und/oder eine oder mehrere Richtungsänderungen des Schlitzes verbleibt der Kleber im Schlitz und läuft nicht hinaus. Der dann aushärtende Kleber hält die Wände des Schlitzes in Position, wodurch Verwindungen oder Scherungen des Kartenkörpers und damit der Chipkarte weiter erschwert oder unterbunden werden. Zudem kann die Gefahr eines Kurzschlusses weiter reduziert werden, da eine Kontaktierung der Wände des Schlitzes durch den Kleber verhindert wird.

Es kann ferner vorgesehen sein, dass die Modulöffnung erst nach dem Aufbringen der Kunststoffschichten erzeugt wird. Die hier vorgeschlagene Erzeugung des Schlitzes kann somit in verschiedenen Phasen der Herstellung eines Kartenkörpers oder einer Chipkarte eingesetzt werden.

Ein erfindungsgemäßer Kartenkörper für eine Chipkarte umfasst
einen metallischen Grundkörper mit zwei gegenüberliegenden Hauptflächen und einer die beiden Hauptflächen verbindenden, umlaufenden Umfangsfläche, wobei in dem Grundkörper eine Modulöffnung zum Aufnehmen eines Chipmoduls bereits erzeugt ist oder in einer Modulöffnungszone noch erzeugt wird, und
einen Schlitz, der sich von der Umfangsfläche des Grundkörpers bis zu der Modulöffnung oder bis zu der Modulöffnungszone erstreckt und der sich zwischen den beiden Hauptflächen erstreckt,
wobei ein Eintrittswinkel des Schlitzes zumindest in eine Hauptfläche ungleich 90° zu der Hauptfläche ist.

Es gelten die gleichen Vorteile und Modifikationen wie zuvor beschrieben.

Die Modulöffnung wird als Durchgangsöffnung oder als Sackloch in einer der Hauptflächen des metallischen Grundkörpers oder des Kartenkörpers ausgenbildet.

Bei der Erstellung des Schlitzes ist entweder die Modulöffnung oder die entsprechende Modulöffnungszone, in welcher die Modulöffnung später ausgebildet wird, vorhanden.

Es kann vorgesehen sein, dass der Eintrittswinkel kleiner gleich 82°, vorzugsweise zwischen 30° und 60°, und höchst vorzugsweise 45° beträgt. Es hat sich gezeigt, dass derartige Winkel abhängig von der Dicke des metallischen Grundkörpers und der Schlitzbreite eine gute Überdeckung der durch den Schlitz getrennten Bereiche des metallischen Grundkörpers bieten. Zum Beispiel beginnt bei einer Dicke des Grundkörpers von 500 µm und einer Schnittbreite und damit Schlitzbreite von 50 µm eine gute Überdeckung der durch den Schlitz getrennten Bereiche bei einem Winkel von etwa 80° bis 82°. Das heißt, die durch den Schlitz getrennten Bereiche des metallischen Grundkörpers ''überlappen'' einander zum Teil, wenn man senkrecht auf eine der Hauptflächen sieht.

Es kann ferner vorgesehen sein, dass der Schlitz durch einen Verzahnungsschnitt geformt ist, der eine Überlappung zwischen zwei gegenüberliegenden Wänden des Schlitzes vorsieht. Unter einem Verzahnungsschnitt wird hier ein Schnitt verstanden, bei dem eine oder mehrere solcher Überlappungen entlang des Verlaufs des Schlitzes vorhanden sind. Diese Überlappung oder Überlappungen verhindern ein Scheren oder Verbiegen des Kartenkörpers in eine oder mehrere Richtungen. Die beiden Hauptrichtungen, in denen ein Scheren oder Verbiegen verhindert werden soll, sind die beiden Normalvektoren auf die beiden Hauptflächen.

Es kann vorgesehen sein, dass eine erste Wand des Schlitzes einen konkaven Bereich aufweist und dass eine gegenüberliegende zweite Wand des Schlitzes einen konvexen Bereich aufweist, wobei der konvexe Bereich in den konkaven Bereich eingreift. Dabei wird der konkave und konvexe Verlauf der Wandflächen in Richtung von einer Hauptfläche zur anderen Hauptfläche betrachtet. Entlang des Schlitzes von einer Hauptfläche zu der zweiten Hauptfläche können auch mehrere konkave Bereiche und entsprechende konvexe Bereiche ausgebildet sein. Mit einem derartigen kurvenförmigen Verlauf des Schlitzes zwischen den beiden Hauptflächen kann eine Scherung des Kartenkörpers und damit der Chipkarte in beide Hauptrichtungen wirkungsvoll unterbunden oder begrenzt werden.

Es kann ferner vorgesehen sein, dass der Schlitz zwischen den beiden Hauptflächen keilförmig ausgebildet ist. Mit einer keilförmigen Form des Schlitzes kann eine Scherung des Kartenkörpers und damit der Chipkarte in beide Hauptrichtungen wirkungsvoll unterbunden oder begrenzt werden. Jeweils eine Seite des Keils verhindert eine Scherbewegung in eine der beiden Hauptrichtungen. Es kann ein symmetrischer Keilschnitt vorgesehen sein, bei dem eine Keilspitze des Schlitzes in einer Mittelebene des Kartenkörpers liegt und beide Schenkel den gleichen Eintrittswinkel aufweisen. Ferner kann ein asymmetrischer Keilschnitt vorgesehen sein, bei dem die Längen und auch die Eintrittswinkel der beiden Schenkel des keilförmigen Schlitzes unterschiedlich sind.

Es kann vorgesehen sein, dass im Bereich einer Keilspitze des Schlitzes eine oder zwei Hinterschneidungen vorgesehen sind. Diese Hinterschneidungen können zum Beispiel durch Verlängerungen der Schenkel des keilförmigen Schlitzes über den Schnittpunkt der beiden Schenkel hinaus, also über die Keilspitze hinaus, gebildet sein. Ein Vorteil dieser Hinterschneidung ist, dass die Wände des Schlitzes im Schnittpunkt oder Kreuzungspunkt der beiden Schenkel weniger Grate aufweisen können. So kann die Gefahr von Kurzschlüssen durch einen Kontakt der gegenüberliegenden Wände des Schlitzes verhindert werden. Zugleich kann das Sackloch der Hinterschneidung als Depot für bei der Herstellung anfallende Späne dienen.

Eine erfindungsgemäße Chipkarte umfasst einen Kartenkörper wie zuvor beschrieben und ein zumindest teilweise in die Modulöffnung des Kartenkörpers eingebettetes Chipmodul. Es gelten die gleichen Vorteile und Modifikationen wie zuvor beschrieben. Der Kartenkörper umfasst einen metallischen Grundkörper und kann mit oder ohne Kunststoffdeckschichten ausgebildet sein.

Die vorliegende Erfindung wird nachfolgend mit Bezug auf die beiliegenden Zeichnungen beispielhaft beschrieben. Darin zeigen
- Fig. 1:: eine Draufsicht eines Kartenkörpers für eine Chipkarte;
- Fig. 2:: eine Schnittdarstellung des Kartenkörpers gemäß Fig. 1 entlang der Linie I-I;
- Fig. 3:: eine Ansicht einer Stirnseite des Kartenkörpers aus Fig. 1;
- Fig. 4:: eine Teilansicht einer Stirnseite eines Kartenkörpers mit einem Schlitz gemäß einem ersten Ausführungsbeispiel, das nicht unter den Schutzumfang der Ansprüche fällt;
- Fig. 5:: eine Teilansicht einer Stirnseite eines Kartenkörpers mit einem Schlitz gemäß einem zweiten Ausführungsbeispiel;
- Fig. 6:: eine Teilansicht einer Stirnseite eines Kartenkörpers mit einem Schlitz gemäß einem dritten Ausführungsbeispiel;
- Fig. 7:: eine Teilansicht einer Stirnseite eines Kartenkörpers mit einem Schlitz gemäß einem vierten Ausführungsbeispiel;
- Fig. 8:: eine Teilansicht einer Stirnseite eines Kartenkörpers mit einem Schlitz gemäß einem fünften Ausführungsbeispiel;
- Fig. 9:: eine Teilansicht einer Stirnseite eines Kartenkörpers mit einem Schlitz gemäß einem sechsten Ausführungsbeispiel;
- Fig. 10:: eine Schnittdarstellung einer Chipkarte mit Kartenkörper und Chipmodul; und
- Fig. 11:: eine schematische Darstellung eines Verfahrens zur Herstellung eines Kartenkörpers.

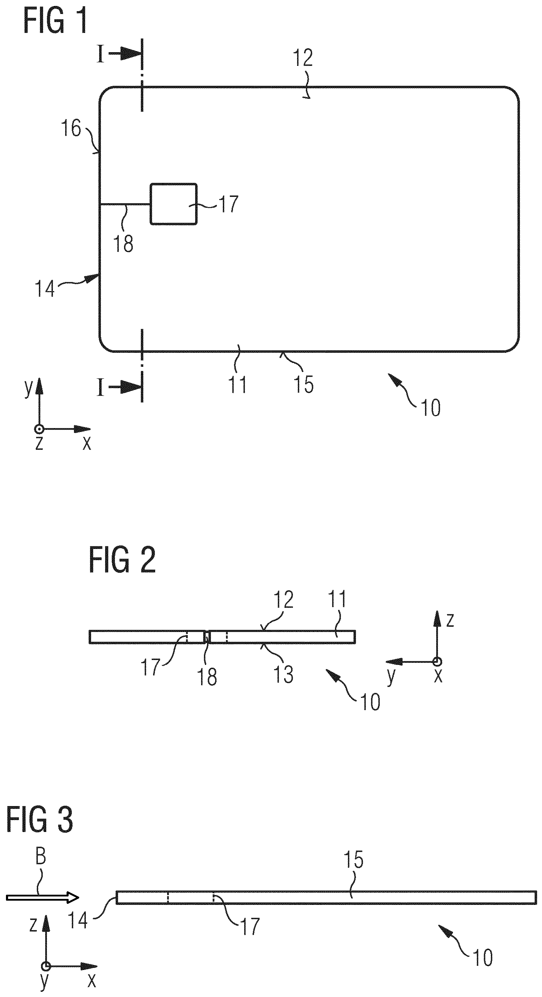

Fig. 1 zeigt einen Kartenkörper 10 für eine Chipkarte. Der Kartenkörper 10 hat einen metallischen Grundkörper 11 mit zwei gegenüberliegenden Hauptflächen, von denen eine Hauptfläche 12 in Fig. 1 sichtbar ist. Die andere, gegenüberliegende Hauptfläche 13 ist in Fig. 2 dargestellt. Die beiden Hauptflächen 12, 13 verlaufen parallel zueinander und sind durch eine umlaufende Umfangsfläche 14 verbunden. Der metallische Grundkörper 11 kann zum Beispiel in Form eines Kerns oder einer Schicht aus einer Edelstahllegierung beispielsweise mit einer Dicke von 400 µm vorliegen. Die Dicke des Grundkörpers 11 kann zum Beispiel zwischen 50 µm und 920 µm betragen.

Der metallische Grundkörper 11 hat eine rechteckige Form in einer x-y-Ebene, in der die Umfangsfläche 14 mit zwei in x-Richtung verlaufenden Längsflächen 15 und zwei in y-Richtung verlaufenden Stirnflächen 16 liegt. Die Dicke des Grundkörpers 11 erstreckt sich in z-Richtung.

Eine Modulöffnung 17 für ein Chipmodul ist in der Hauptfläche 12 des Kartenkörpers 10 ausgenommen. Die Modulöffnung 17 erstreckt sich hier durch den gesamten metallischen Grundkörper 11, kann aber auch als Sacklochöffnung ausgebildet sein. Sie kann auch erst später erzeugt werden. Die Modulöffnung 17 wird beispielsweise mittels eines Laserarbeitsganges oder Fräsarbeitsganges erstellt.

In dem metallischen Grundkörper 11 ist ein Schlitz 18 vorgesehen, der sich von der Umfangsfläche 14 oder mit anderen Worten von einer Außenkante des metallischen Grundkörpers 11 zu der Modulöffnung 17 erstreckt. Somit verbindet der Schlitz 18 die Modulöffnung 17 mit der Umfangsfläche 14. Der Schlitz 18 verläuft in y-Richtung, das heißt parallel zu der Längsfläche 15. Der Schlitz 18 hat zum Beispiel eine Breite zwischen 30 µm und 100 µm, bevorzugt zwischen 50 µm und 80 µm.

In Fig. 1 ist der Schlitz 18 auf einer linken Seite dargestellt. Der Schlitz 18 kann auch an einer rechten, oberen oder unteren Seite des Grundkörpers 11 angeordnet sein. Der Schlitz 18 dient zur Vermeidung von Kurzschlussströmen beziehungsweise Wirbelströmen.

Fig. 2 zeigt eine Schnittdarstellung des Kartenkörpers 10 gemäß der Linie I-I aus Fig. 1. Erkennbar ist, dass der Schlitz 18 den Grundkörper 11 in der Dicke oder Höhe, das heißt der z-Richtung, vollständig durchtrennt. Der Schlitz 18 verbindet somit die beiden Hauptflächen 12, 13. Der Schlitz 18 reicht in y-Richtung bis zur Modulöffnung 17.

Fig. 3 zeigt eine Ansicht auf die Längsfläche 15 des Kartenkörpers 10. In diesem Fall liegt der Kartenkörper 10 oder der metallische Grundkörper 11 schon ausgeschnitten vor. Die Modulöffnung 17 ist auch bereits in dem Grundkörper 11 ausgenommen, während der Schlitz noch nicht ausgebildet ist. Der Schlitz wird in dem metallischen Grundkörper 11zum Beispiel durch Laserschneiden, Wasserschneiden oder Fräsen ausgebildet. Dies erfolgt in einer Bearbeitungsrichtung B von der Umfangsfläche 14, hier von der Stirnfläche 16, des Kartenkörpers 10 oder des metallischen Grundkörpers 11 aus. Die Ausbildung des Schlitzes erfolgt bis zu der Wandung der Modulöffnung 17, so dass der Schlitz und die Modulöffnung 17 miteinander kommunizieren oder in Verbindung stehen.

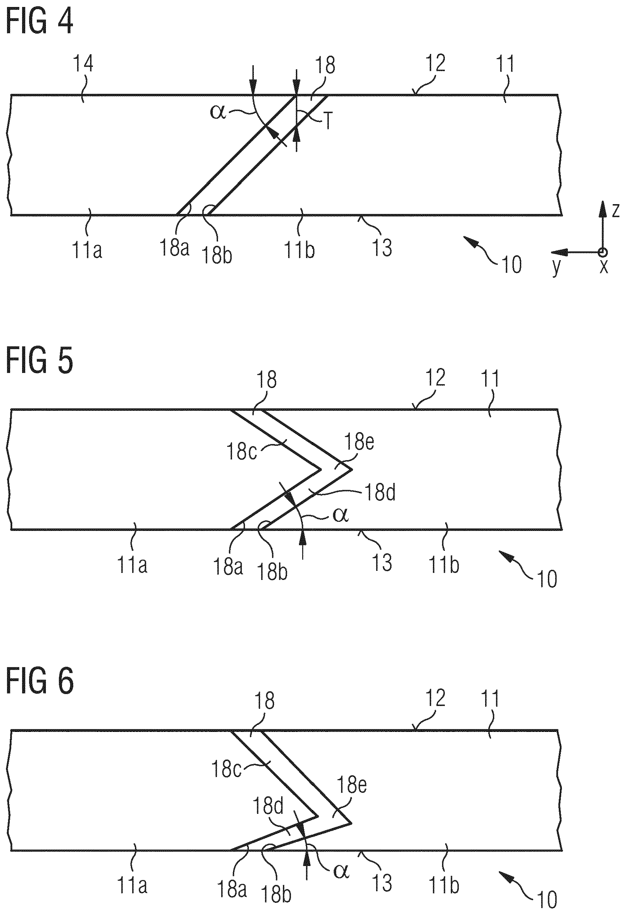

Fig. 4 zeigt eine Teilansicht der Stirnfläche 16 des Kartenkörpers 11 oder des metallischen Grundkörpers 11 mit einem Schlitz 18. Ein Eintrittswinkel a des Schlitzes 18 ist zu der Hauptfläche 12 und analog zu der Hauptfläche 13 ungleich 90°.

In Fig. 4 ist der Schlitz 18 durchgängig in einem 45° Winkel ausgeführt. Der Eintrittswinkel a kann zum Beispiel kleiner gleich 85° oder zwischen 30° und 60° gewählt sein. Der Eintrittswinkel a kann je nach gewählter Seite oder Wand des Schlitzes 18 45° oder als entsprechender Supplementwinkel 135° betragen.

Der Schlitz 18 ist durch einen Verzahnungsschnitt geformt, der eine Überlappung oder Überdeckung zwischen zwei gegenüberliegenden Wänden 18a und 18b des Schlitzes 18 vorsieht. Diese Überlappung oder Überdeckung liegt in Richtung einer Flächennormale zu der Hauptfläche 12 vor oder anders ausgedrückt in Richtung der Dicke oder Höhe des Kartenkörpers 10 oder Grundkörpers 11. In den Figuren ist dies die z-Richtung. Die beiden Wände 18a, 18b können parallel verlaufen.

Die oben angegebenen Winkel erlauben für die üblichen Dicken der Kartenkörper von zum Beispiel zwischen 50 µm und 920 µm und üblichen Schnittbreiten zwischen 40 µm und 80 µm eine ausreichende Überlappung oder Überdeckung.

In dem in Fig. 4 dargestellten Beispiel, das nicht unter den Schutzumfang der Ansprüche fällt, beträgt die Dicke oder Höhe des Kartenkörpers 10 oder des metallischen Grundkörpers 11 400 µm. Mit dem Eintrittswinkel a von 45° beträgt eine sichtbare Tiefe T etwa 110 µm. Die sichtbare Tiefe T ist die Entfernung der Wand 18b von der Hauptfläche 12, lotrecht oder in Richtung der Flächennormalen der Hauptfläche 12 an dem Eintrittspunkt der Wand 18a betrachtet. Diese sichtbare Tiefe T kann zum Beispiel als Maß für eine Überlappung oder Überdeckung gesehen werden.

Der Schlitz 18 mit seinen Wänden 18a und 18b teilt den Grundkörper 11 in zwei Bereiche 11a und 11b, wobei der Bereich 11a auf der Seite der Wand 18a liegt und von dieser begrenzt wird. Analog liegt der Bereich 11b auf der Seite der Wand 18b und wird von dieser begrenzt.

Im Bereich des Schlitzes 18 existiert somit eine Überlappung oder Überdeckung der beiden Wände 18a und 18b und somit der zwei Bereiche 11a und 11b. Diese Überlappung oder Überdeckung liegt in Richtung der Flächennormalen der Hauptfläche 12 vor. Bei einem, auch virtuellen, Schnitt in Richtung der Flächennormalen durch den Grundkörper 11 liegen somit stets ein Schnittpunkt mit beiden Wänden 18a und 18b und somit beiden Bereichen 11a und 11b vor.

Die Überlappung oder Überdeckung der beiden Wände 18a und 18b beziehungsweise der zwei Bereiche 11a und 11b blockiert nun das Verschieben des Bereichs 11a über den Bereich 11b. Dies entspricht einer Druckbewegung auf den Bereich 11b in z-Richtung, also einer Bewegung der beiden Wände 18a und 18b aufeinander zu. Der Bereich 11b kann sich nur einen kleinen Weg, der in etwa der sichtbaren Tiefe T entspricht, bewegen. Dann liegt er an dem Bereich 11a an und wird von diesem gestoppt. Somit kann der schräg ausgebildete Schlitz 18 eine unerwünschte Scherbewegung des Kartenkörpers 10 oder des Grundkörpers 11 verhindern.

Wenn hingegen der Bereich 11b von dem Bereich 11a wegbewegt wird, was in Fig. 4 einer Bewegung nach unten in die negative z-Richtung entspricht, findet keine Blockierung statt.

Die obigen Betrachtungen der Bewegung des Bereichs 11b gelten analog für den Bereich 11a, nur mit entsprechend umgekehrter Bewegung.

Fig. 5 zeigt eine Teilansicht der Stirnfläche 16 des Kartenkörpers 10 mit einem Schlitz 18, der zwischen den beiden Hauptflächen 12 und 13 keilförmig ausgebildet ist.

Wie in Fig. 4 beträgt der Eintrittswinkel a 45°. Im Gegensatz zu Fig. 4 ist der Schlitz 18 im Querschnitt nicht geradlinig ausgebildet, sondern als symmetrischer Keilschnitt mit zwei Schenkeln 18c und 18d, welche beide den gleichen Eintrittswinkel a aufweisen. Eine Keilspitze 18e des Schlitzes 18 liegt in einer Mittelebene des Kartenkörpers 10 oder des Grundkörpers 11. Davon abgesehen gelten die Angaben gemäß Fig. 4 ebenso für den in Fig. 5 abgebildeten Kartenkörper 10 oder Grundkörper 11.

Im Gegensatz zu dem in Fig. 4 dargestellten Kartenkörper 10 existiert hier im Bereich des Schlitzes 18 eine doppelte Überlappung oder Überdeckung der beiden Wände 18a und 18b beziehungsweise der zwei Bereiche 11a und 11b.

Bei einem, auch virtuellen, Schnitt in Richtung der Flächennormalen durch den Grundkörper 11 liegen somit zumindest abschnittsweise zwei Schnittpunkte mit beiden Wänden 18a und 18b vor.

Diese gewissermaßen doppelte Überlappung oder Überdeckung der beiden Wände 18a und 18b oder der zwei Bereiche 11a und 11b blockiert nun das Verschieben der beiden Bereiche 11a und 11b in beide Richtungen. Somit kann der keilförmig ausgebildete Schlitz 18 eine unerwünschte Scherbewegung des Kartenkörpers 10 oder des Grundkörpers 11 in beide Richtungen verhindern. Der Begriff beide Richtungen meint in Richtung beider Flächennormalen der Hauptflächen 12 und 13.

Fig. 6 zeigt eine Teilansicht der Stirnfläche 16 des Kartenkörpers 10 mit einem Schlitz 18, der als asymmetrischer Keilschnitt ausgebildet ist.

Wie in Fig. 5 ist der Schlitz 18 keilförmig ausgebildet, jedoch als asymmetrischer Keilschnitt mit zwei Schenkeln 18c und 18d, bei dem die Längen und auch die Eintrittswinkel a der beiden Schenkel 18c und 18d des keilförmigen Schlitzes 18 unterschiedlich sind. Die Keilspitze 18e des Schlitzes 18 liegt außermittig in dem Kartenkörper 10 oder Grundkörper 11. Daher wird allgemein auf die obige Beschreibung der Figuren 4 und 5 verwiesen.

Auch hier existiert im Bereich des Schlitzes 18 eine doppelte Überlappung oder Überdeckung der beiden Wände 18a und 18b beziehungsweise der zwei Bereiche 11a und 11b. Bei einem, auch virtuellen, Schnitt in Richtung der Flächennormalen durch den Grundkörper 11 liegen somit zumindest abschnittsweise zwei Schnittpunkte mit beiden Wänden 18a und 18b vor.

Diese gewissermaßen doppelte Überlappung oder Überdeckung der beiden Wände 18a und 18b oder der zwei Bereiche 11a und 11b blockiert das Verschieben der beiden Bereiche 11a und 11b in beide Richtungen. Somit kann der keilförmig ausgebildete Schlitz 18 eine unerwünschte Scherbewegung des Kartenkörpers 10 oder des Grundkörpers 11 in beide Richtungen verhindern. Der Begriff beide Richtungen meint in Richtung beider Flächennormalen beider Hauptflächen 12 und 13.

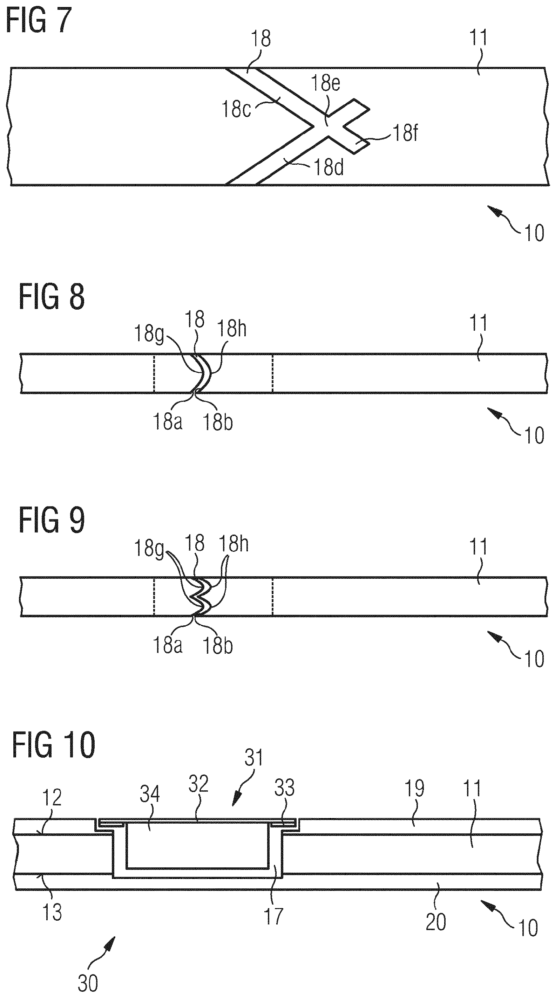

Fig. 7 zeigt eine Teilansicht der Stirnfläche 16 des Kartenkörpers 10 mit einem Schlitz 18, bei dem im Bereich der Keilspitze 18e des Schlitzes 18 jeweils eine Hinterschneidung 18f für beide Schenkel 18c und 18d vorgesehen ist.

Bis auf die beiden Hinterschneidungen 18f ist der Schlitz 18 beziehungswiese der Kartenkörper 10 oder Grundkörper 11 identisch zu dem in Fig. 5 dargestellten Schlitz 18 beziehungswiese Kartenkörper 10 oder Grundkörper 11. Daher wird allgemein auf die obige Beschreibung der Fign. 4 bis 6 verwiesen, um Wiederholungen zu vermeiden. Die beiden Hinterschneidungen 18f können auch bei einem asymmetrischen Schlitz vorgesehen sein.

Diese Hinterschneidungen 18f können zum Beispiel durch Verlängerungen der Schenkel 18c, 18d des keilförmigen Schlitzes 18 über den Schnittpunkt 18f der beiden Schenkel 18c, 18d hinaus gebildet sein. Die Länge oder Tiefe der Hinterschneidungen 18f kann zum Beispiel der Schnittbreite des Schlitzes 18 entsprechen. Ebenso ist es möglich, dass die Hinterschneidung 18f eines Schenkels so kurz ausgebildet ist, dass sie den anderen Schenkel oder dessen Wandung gerade durchdringt.

Fig. 8 zeigt eine Teilansicht der Stirnfläche 16 des Kartenkörpers 10 mit einem Schlitz 18, der bogenförmig ausgebildet ist oder anders ausgedrückt von der Hauptfläche 12 zur Hauptfläche 13 einen gekrümmten Verlauf hat.

Eine Wand 18a des bogenförmigen Schlitzes 18 hat einen konvexen Bereich 18g und eine gegenüberliegende Wand 18b des Schlitzes 18 hat einen konkaven Bereich 18h, wobei der konvexe Bereich 18g in den konkaven Bereich 18h eingreift. Die beiden Bereiche 18g und 18h können derart abgestimmt sein, dass sie parallel zueinander verlaufen. Dies lässt sich einfach durch ein Werkzeug in der Breite des Schlitzes 18 realisieren.

Der konvexe Bereich 18g und der konkave Bereich 18h können einen Teil oder die Gesamtheit der jeweiligen Wand 18a oder 18b einnehmen.

Die weiteren Details zum Beispiel hinsichtlich des Eintrittswinkels oder der Überdeckung entsprechen denen zu den Fig. 4 bis 6. So kann zum Beispiel der bogenförmige Schlitz 18 auch asymmetrisch ausgebildet sein.

Fig. 9 zeigt eine Teilansicht der Stirnfläche 16 des Kartenkörpers 10 mit einem Schlitz 18 mit zwei konvexen und konkaven Bereichen 18g und 18h. Entsprechend gelten im Allgemeinen die Aussagen hinsichtlich der Fig. 8 auch für den Kartenkörper 10 gemäß Fig. 9.

Der Kartenkörper 10 oder Grundkörper 11 gemäß Fig. 9 hat zwei benachbarte konvexe Bereiche 18g im Verlauf der Wand 18a und zwei benachbarte konkave Bereiche 18h im Verlauf der Wand 18b, wobei die jeweiligen Bereiche ineinandergreifen.

Die beiden konvexen Bereiche 18g und die beiden konkaven Bereiche 18h können direkt aneinandergrenzen. Ebenso ist es möglich, dass zwischen zwei jeweiligen Bereichen ein neutraler Bereich zum Beispiel in Form einer geraden Strecke vorgesehen sein kann.

Fig. 10 zeigt eine Schnittdarstellung einer Chipkarte 30 mit einem Kartenkörper 10 wie zuvor beschrieben und einem Chipmodul 31.

Der Kartenkörper 10 umfasst den Grundkörper 11 zum Beispiel in Form einer metallischen Schicht in Form eines Kerns oder einer Schicht aus einer Edelstahllegierung mit einer Dicke von 400 µm.

Eine Hauptfläche 12 oder Oberfläche des Grundkörpers 11 ist mit einer Kunststoffschicht 19 bedeckt oder laminiert. Eine gegenüberliegende zweite Hauptfläche 13 oder Oberfläche des Grundkörpers 11 ist mit einer weiteren Kunststoffschicht 20 bedeckt oder laminiert. Die beiden Kunststoffschichten 19, 20 können zum Beispiel aus PVC, PET, PE, PET-G, PLA oder PC bestehen. Die Dicke des gesamten Kartenkörpers 10 sollte die maximale Dicke eines Chipkartenkörpers gemäß ISO 7810 nicht übersteigen. Typischerweise beträgt die Dicke der Kunststofffolien bei einer Dicke der Metallschicht von 400 µm jeweils 180 µm, so dass sich insgesamt eine Dicke des Chipkartenkörpers von 760 µm ergibt.

Die Modulöffnung 17 ist in der Hauptseite oder Oberfläche des Kartenkörpers 10 ausgenommen. Die Modulöffnung 17 erstreckt sich durch die gesamte Kunststoffschicht 19, den gesamten metallischen Grundkörper 11 sowie einen Teil der Kunststoffschicht 20. Die Modulöffnung 17 wird beispielsweise mittels eines Laserarbeitsganges oder Fräsarbeitsganges erstellt.

Das Chipmodul 31 ist in der Modulöffnung 17 angeordnet und dort zum Beispiel verklebt. Das Chipmodul 31 umfasst eine Kontaktflächenstruktur 32, die eine Spule 33 trägt. Die Kontaktflächenstruktur 32 liegt in einem äußeren Bereich der Modulöffnung 17 auf der Kunststoffschicht 19 auf.

Das Chipmodul 31 umfasst ferner einen Chip 34, der zum Beispiel in einer Vergussmasse an einer Unterseite der Kontaktflächenstruktur 32 befestigt ist. Über die Spule 33 wird der Chip 34 mit Energie und/oder Signalen versorgt. So kann ein aus dem metallischen Grundkörper 11 austretendes elektromagnetisches Feld in die Spule 33 eingekoppelt werden.

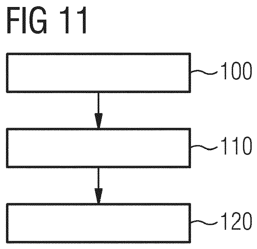

Fig. 11 zeigt eine schematische Darstellung eines Verfahrens zur Herstellung eines Kartenkörpers 10 wie zuvor beschrieben.

In einem ersten Schritt 100 des Verfahrens zur Herstellung eines Kartenkörpers 10 für eine Chipkarte 30, erfolgt ein Bereitstellen des metallischen Grundkörpers 11 mit zwei gegenüberliegenden Hauptflächen 12, 13 und einer die beiden Hauptflächen12, 13 verbindenden, umlaufenden Umfangsfläche 14. In den Hauptflächen 12, 13 kann eine die beiden Hauptflächen 12, 13 verbindende Modulöffnung bereits vorgesehen sein oder auch erst später vorgesehen werden.

In einem zweiten Schritt 110 des Verfahrens erfolgt ein Erzeugen des Schlitzes 18 auf der Umfangsfläche 14 zwischen den beiden Hauptflächen 12, 13, wobei der Schlitz 18 von der Umfangsfläche 14 bis zu der Modulöffnung 17 ausgebildet wird. Sollte die Modulöffnung 17 in einem späteren Fertigungsschritt hergestellt werden, wird der Schlitz bis zu der entsprechenden Modulöffnungszone erzeugt, wo die Modulöffnung später ausgebildet werden soll.

Das Werkzeug zur Erstellung des Schlitzes 18 ist dabei auf die Umfangsfläche 14 gerichtet, idealerweise senkrecht auf die Umfangsfläche 14. Dazu wird die Hauptachse des Werkzeugs, mit dem der Schlitz 18 erzeugt wird, parallel zu den Hauptflächen
12, 13 ausgerichtet und der Schlitz beginnend an der Umfangsfläche 14 in Richtung und bis hin zur Modulöffnung 17 oder zur entsprechenden Zone erzeugt.

Die Ausbildung des Schlitzes 18 wird derart vorgenommen, dass ein Eintrittswinkel a des Schlitzes 18 zumindest in eine Hauptfläche 12 ungleich neunzig Grad zu der Hauptfläche 12 ist. Der Schlitz 18 wird vollständig zwischen den beiden Hauptflächen 12, 13 ausgeführt, so dass diese durch den Schlitz 18 verbunden sind.

Optional, zum Beispiel wenn der Schlitz 18 mit einem Laser geschnitten wird, wird ein Fokus des Werkzeugs oder des Lasers mit zunehmender Schnitttiefe nachjustiert. So kann der Materialabtrag stets in einem optimalen Arbeitspunkt erfolgen. Die Ausbildung des Schlitzes 18 erfolgt dann stufenweise oder kontinuierlich. Es kann auch an dem jeweiligen Bearbeitungspunkt eine Ausbildung in voller Tiefe erfolgen.

Gemäß dem obigen Verfahren werden die in den Figuren 4 bis 9 dargestellten Kartenkörper 10 oder Grundkörper 11 ausgebildet. Im Folgenden sind Details zu der Herstellung der jeweiligen Kartenkörper 10 oder Grundkörper 11 beschrieben.

Für den Kartenkörper 10 oder Grundkörper 11 gemäß Fig. 4 erfolgt ein geradliniger Schnitt unter einem Eintrittswinkel a des Schlitzes 18 in eine Hauptfläche 12 bis zu der gegenüberliegenden Hauptfläche 13.

Für den Kartenkörper 10 oder Grundkörper 11 gemäß den Figuren 5 und 6 wird wie für Fig. 4 gestartet, bis in einem Bereich der zu erzeugenden Keilspitze 18e ein Richtungswechsel des Werkzeugs vorgenommen wird, damit die Keilform entsteht. Zum Beispiel beginnt ein Schneid- oder Fräsvorgang an dem Schenkel 18c unter einem Winkel von 45° zu der Hauptfläche 12. Der Schnitt wird geradlinig bis zu der Keilspitze 18e geführt. Dort wird die Bewegungsbahn des Werkzeugs um einen Winkel, zum Beispiel 90°, gedreht, um dann den Schenkel 18d zu bilden.

Für den Kartenkörper 10 oder Grundkörper 11 gemäß Fig. 7 werden Hinterschneidungen 18f zum Beispiel durch Verlängerungen der Schenkel 18c, 18d des keilförmigen Schlitzes 18 über den Schnittpunkt 18f der beiden Schenkel 18c, 18d hinaus gebildet. Dazu fährt das Werkzeug über die Keilspitze 18e in unveränderter Richtung hinaus bis die Hinterschneidung 18f ausgebildet ist. Bei dem zweiten Schenkel wird ebenso verfahren.

Für den Kartenkörper 10 oder Grundkörper 11 gemäß den Figuren 8 und 9 werden durch eine geeignete Werkzeugbahn ein oder mehrere konvexe Bereiche 18g im Verlauf der Wand 18a und ein oder mehrere konkave Bereiche 18h im Verlauf der Wand 18b ausgebildet, wobei die jeweiligen konvexen und konkaven Bereiche ineinandergreifen.

Zur Ausbildung dieser konvexen und konkaven Bereiche wird das Werkzeug in einer Bogenlinie über die Umfangsfläche 14 bewegt. Dabei sind Kombinationen von konvexen und konkaven Bereichen möglich. Diese Bereiche sollen ineinandergreifen oder anders ausgedrückt sich überlappen, um Scherbewegungen des Kartenkörpers 10 zu vermeiden.

In einem optionalen dritten Schritt 120 des Verfahrens wird jeweils eine Kunststoffschicht 19, 20 mittels eines Klebers auf die Hauptflächen 12, 13 aufgebracht, wobei der Schlitz 18 zumindest teilweise mit dem Kleber gefüllt wird. Durch die innere Kontur des Schlitzes 18 wird ein Auslaufen des Klebers zumindest teilweise verhindert, so dass dieser in dem Schlitz 18 verbleibt. Durch den in dem Schlitz aushärtenden Kleber wird der Kartenkörper 10 oder die Chipkarte 30 weiter stabilisiert. Falls die Modulöffnung 17 im Kartenkörper 10 erst nach dem Aufbringen der Kunststoffschichten hergestellt wird, so verhindert der in den Schlitz 18 geflossene und dort getrocknete oder ausgehärtete Kleber, dass bei der Erzeugung des Modulöffnung 17 anfallende Späne sich im Schlitz 18 festsetzen und dort einen elektrischen Kurzschluss hervorrufen können.

## Patentansprüche

1. Verfahren zur Herstellung eines Kartenkörpers (10) für eine Chipkarte (30) mit den Schritten:
- Bereitstellen (100) eines metallischen Grundkörpers (11) mit zwei gegenüberliegenden Hauptflächen (12, 13) und einer die beiden Hauptflächen (12, 13) verbindenden, umlaufenden Umfangsfläche (14), wobei in dem Grundkörper (11) eine Modulöffnung (17) zum Aufnehmen eines Chipmoduls (30) bereits erzeugt ist oder in einer Modulöffnungszone noch erzeugt wird, und
- Erzeugen (200) eines Schlitzes (18) auf der Umfangsfläche (14) zwischen den beiden Hauptflächen (12, 13), wobei der Schlitz (18) von der Umfangsfläche (14) bis zu der Modulöffnung (17) oder bis zu der Modulöffnungszone ausgebildet wird, und wobei ein Eintrittswinkel (a) des Schlitzes (18) zumindest in eine der beiden Hauptflächen (12) ungleich neunzig Grad zu der Hauptfläche (12) ist, **dadurch gekennzeichnet, dass** zumindest ein Bereich des Schlitzes (18) von einer Hauptseite (12) zur anderen Hauptseite (13) bogenförmig ausgebildet wird, so dass eine erste Wand (18b) des Schlitzes (18) einen konkaven Bereich (18h) aufweist und eine gegenüberliegende zweite Wand (18a) des Schlitzes (18) einen konvexen Bereich (18g) aufweist, wobei der konvexe Bereich (18g) in den konkaven Bereich (18h) eingreift.

2. Verfahren zur Herstellung eines Kartenkörpers (10) nach Anspruch 1, **dadurch gekennzeichnet, dass** der Schlitz (18) durch einen Verzahnungsschnitt geformt wird, der eine Überlappung zwischen zwei gegenüberliegenden Wänden (18a, 18b) des Schlitzes (18) vorsieht.

3. Verfahren zur Herstellung eines Kartenkörpers (10) nach Anspruch 1 oder 2, **dadurch gekennzeichnet, dass** der Schlitz (18) mit einem Laser geschnitten wird und dass vorzugsweise der Fokus des Lasers mit zunehmender Schnitttiefe nachjustiert wird.

4. Verfahren zur Herstellung eines Kartenkörpers (10) nach einem der Ansprüche 1 bis 3, **dadurch gekennzeichnet, dass** bei dem Erzeugen des Schlitzes (18) ein Richtungswechsel vorgenommen wird, so dass der Schlitz (18) zwischen den beiden Hauptflächen (12, 13) keilförmig ausgebildet wird.

5. Verfahren zur Herstellung eines Kartenkörpers (10) nach einem der Ansprüche 1 bis 4, **dadurch gekennzeichnet, dass** jeweils eine Kunststoffschicht (19, 20) mittels eines Klebers auf die Hauptflächen (12, 13) aufgebracht wird, wobei der Schlitz (18) zumindest teilweise mit dem Kleber gefüllt wird.

6. Verfahren zur Herstellung eines Kartenkörpers (10) nach Anspruch 5, **dadurch gekennzeichnet, dass** die Modulöffnung (17) erst nach dem Aufbringen der Kunststoffschichten (19, 20) erzeugt wird.

7. Kartenkörper (10) für eine Chipkarte (30), aufweisend
einen metallischen Grundkörper (11) mit zwei gegenüberliegenden Hauptflächen (12, 13) und einer die beiden Hauptflächen (12, 13) verbindenden, umlaufenden Umfangsfläche (14), wobei in dem Grundkörper eine Modulöffnung (17) zum Aufnehmen eines Chipmoduls (30) bereits erzeugt ist oder in einer Modulöffnungszone noch erzeugt wird, und
einen Schlitz (18), der sich von der Umfangsfläche (14) des Grundkörpers (11) bis zu der Modulöffnung (17) oder bis zu der Modulöffnungszone erstreckt und der sich zwischen den beiden Hauptflächen (12, 13) erstreckt,
wobei ein Eintrittswinkel (a) des Schlitzes (18) zumindest in eine Hauptfläche (12) ungleich 90° zu der Hauptfläche (12) ist, **dadurch gekennzeichnet, dass** eine erste Wand (18b) des Schlitzes (18) einen konkaven Bereich (18h) aufweist und dass eine gegenüberliegende zweite Wand (18a) des Schlitzes (18) einen konvexen Bereich (18g) aufweist, wobei der konvexe Bereich (18g) in den konkaven Bereich (18h) eingreift.

8. Kartenkörper (10) nach Anspruch 7, **dadurch gekennzeichnet, dass** der Eintrittswinkel (a) kleiner gleich 82°, vorzugsweise zwischen 30° und 60°, und höchst vorzugsweise 45° beträgt.

9. Kartenkörper (10) nach Anspruch 7 oder 8, **dadurch gekennzeichnet, dass** der Schlitz (18) durch einen Verzahnungsschnitt geformt ist, der eine Überlappung zwischen zwei gegenüberliegenden Wänden (18a, 18b) des Schlitzes (18) vorsieht.

10. Kartenkörper (10) nach einem der Ansprüche 7 bis 9, **dadurch gekennzeichnet, dass** der Schlitz (18) zwischen den beiden Hauptflächen (12, 13) keilförmig ausgebildet ist.

11. Kartenkörper (10) nach Anspruch 10, **dadurch gekennzeichnet, dass** im Bereich einer Keilspitze (18e) des Schlitzes (18) eine oder zwei Hinterschneidungen (18f) vorgesehen sind.

12. Chipkarte (30), umfassend einen Kartenkörper (10) nach einem der Ansprüche 7 bis 11 und ein zumindest teilweise in die Modulöffnung (17) des Kartenkörpers (10) eingebettetes Chipmodul (31).

## Claims

1. Method for producing a card body (10) for a chip card (30), comprising the steps of:
- providing (100) a metal main body (11) with two opposite main surfaces (12, 13) and a peripheral circumferential surface (14) connecting the two main surfaces (12, 13), wherein a module opening (17) for receiving a chip module (30) is already made in the main body (11) or is yet to be made in a module opening zone, and
- producing (200) a slot (18) on the circumferential surface (14) between the two main surfaces (12, 13), wherein the slot (18) is formed from the circumferential surface (14) up to the module opening (17) or up to the module opening zone, and
wherein an entry angle (α) of the slot (18) at least into one of the two main surfaces (12) is not equal to ninety degrees with respect to the main surface (12), **characterized in that** at least a region of the slot (18) is formed in an arched shape from one main side (12) to the other main side (13) so that a first wall (18b) of the slot (18) has a concave region (18h) and an opposite second wall (18a) of the slot (18) has a convex region (18g), wherein the convex region (18g) engages in the concave region (18h).

2. Method for producing a card body (10) according to Claim 1, **characterized in that** the slot (18) is shaped by a toothed cut providing an overlap between two opposite walls (18a, 18b) of the slot (18).

3. Method for producing a card body (10) according to Claim 1 or 2, **characterized in that** the slot (18) is cut with a laser and that the focus of the laser is preferably readjusted as the cutting depth increases.

4. Method for producing a card body (10) according to any one of Claims 1 to 3, **characterized in that** a change of direction is made when producing the slot (18), such that the slot (18) between the two main surfaces (12, 13) is formed in a wedge shape.

5. Method for producing a card body (10) according to any one of Claims 1 to 4, **characterized in that** a plastic layer (19, 20) is applied to each of the main surfaces (12, 13) by means of an adhesive, wherein the slot (18) is at least partially filled with the adhesive.

6. Method for producing a card body (10) according to Claim 5, **characterized in that** the module opening (17) is only produced after the plastic layers (19, 20) have been applied.

7. Card body (10) for a chip card (30), having a metal main body (11) with two opposite main surfaces (12, 13) and a peripheral circumferential surface (14) connecting the two main surfaces (12, 13), wherein a module opening (17) for receiving a chip module (30) is already made in the main body or is yet to be made in a module opening zone, and
a slot (18) which extends from the circumferential surface (14) of the main body (11) to the module opening (17) or to the module opening zone and which extends between the two main surfaces (12, 13),
wherein an entry angle (α) of the slot (18) at least into a main surface (12) is not equal to 90° with respect to the main surface (12), **characterized in that** a first wall (18b) of the slot (18) has a concave region (18h) and that an opposite second wall (18a) of the slot (18) has a convex region (18g), wherein the convex region (18g) engages in the concave region (18h).

8. Card body (10) according to Claim 7, **characterized in that** the entry angle (α) is less than or equal to 82°, preferably between 30° and 60°, and most preferably 45°.

9. Card body (10) according to Claim 7 or 8, **characterized in that** the slot (18) is shaped by a toothed cut providing an overlap between two opposite walls (18a, 18b) of the slot (18).

10. Card body (10) according to any one of Claims 7 to 9, **characterized in that** the slot (18) between the two main surfaces (12, 13) is formed in a wedge shape.

11. Card body (10) according to Claim 10, **characterized in that** one or two undercuts (18f) are provided in the region of a wedge tip (18e) of the slot (18).

12. Chip card (30), comprising a card body (10) according to one of Claims 7 to 11 and a chip module (31) at least partially embedded in the module opening (17) of the card body (10).

## Revendications

1. Procédé de production d'un corps de carte (10) pour une carte à puce (30), comprenant les étapes suivantes :
- fourniture (100) d'un corps principal métallique (11) comprenant deux surfaces principales (12, 13) se trouvant en regard l'une de l'autre et une surface circonférentielle périphérique (14) qui relie les deux surfaces principales (12, 13), une ouverture de module (17) destinée à recevoir un module de puce (30) étant déjà réalisée dans le corps principal (11) ou devant encore être réalisée dans une zone d'ouverture de module, et
- la réalisation (200) d'une fente (18) sur la surface périphérique (14) entre les deux surfaces principales (12, 13), la fente (18) étant formée de la surface périphérique (14) jusqu'à l'ouverture de module (17) ou jusqu'à la zone d'ouverture de module, et un angle d'insertion (α) de la fente (18) dans au moins l'une des deux surfaces principales (12) étant différent de quatre-vingt-dix degrés par rapport à la surface principale (12), **caractérisé en ce qu'**au moins une zone de la fente (18) est réalisée en forme d'arc d'une surface principale (12) à l'autre surface principale (13), de sorte qu'une première paroi (18b) de la fente (18) présente une zone concave (18h) et qu'une seconde paroi opposée (18a) de la fente (18) présente une zone convexe (18g), la zone convexe (18g) s'engageant dans la zone concave (18h).

2. Procédé de production d'un corps de carte (10) selon la revendication 1, **caractérisé en ce que** la fente (18) est formée par une coupe dentelée qui prévoit un chevauchement entre deux parois en regard l'une de l'autre (18a, 18b) de la fente (18).

3. Procédé de production d'un corps de carte (10) selon la revendication 1 ou 2, **caractérisé en ce que** la fente (18) est découpée à l'aide d'un laser et **en ce que** le foyer du laser est de préférence réajusté lorsque la profondeur de coupe augmente.

4. Procédé de production d'un corps de carte (10) selon l'une quelconque des revendications 1 à 3, **caractérisé en ce que**, lors de la réalisation de la fente (18), un changement de direction est effectué, de sorte que la fente (18) est réalisée en forme de coin entre les deux surfaces principales (12, 13).

5. Procédé de production d'un corps de carte (10) selon l'une quelconque des revendications 1 à 4, **caractérisé en ce qu'**une couche de matière plastique (19, 20) est respectivement appliquée sur les surfaces principales (12, 13) au moyen d'un adhésif, la fente (18) étant au moins partiellement remplie de l'adhésif.

6. Procédé de production d'un corps de carte (10) selon la revendication 5, **caractérisé en ce que** l'ouverture de module (17) n'est réalisée qu'après l'application des couches de matière plastique (19, 20).

7. Corps de carte (10) pour une carte à puce (30), comportant
un corps principal métallique (11) comprenant deux surfaces principales (12, 13) se trouvant en regard l'une de l'autre et une surface circonférentielle périphérique (14) qui relie les deux surfaces principales (12, 13), une ouverture de module (17) destinée à recevoir un module de puce (30) étant déjà réalisée dans le corps principal ou devant encore être réalisée dans une zone d'ouverture de module, et
une fente (18) qui s'étend d'une surface circonférentielle (14) du corps principal (11) jusqu'à l'ouverture de module (17) ou jusqu'à la zone d'ouverture de module et qui s'étend entre les deux surfaces principales (12, 13),
un angle d'insertion (α) de la fente (18) dans au moins une surface principale (12) étant différent de 90° par rapport à la surface principale (12), **caractérisé en ce qu'**une première paroi (18b) de la fente (18) présente une zone concave (18h) et **en ce qu'**une seconde paroi opposée (18a) de la fente (18) présente une zone convexe (18g), la zone convexe (18g) s'engageant dans la zone concave (18h).

8. Corps de carte (10) selon la revendication 7, **caractérisé en ce que** l'angle d'insertion (α) est inférieur ou égal à 82°, de préférence compris entre 30° et 60°, et de façon particulièrement préférée de 45°.

9. Corps de carte (10) selon la revendication 7 ou 8, **caractérisé en ce que** la fente (18) est formée par une coupe dentelée qui prévoit un chevauchement entre deux parois en regard l'une de l'autre (18a, 18b) de la fente (18).

10. Corps de carte (10) selon l'une quelconque des revendications 7 à 9, **caractérisé en ce que** la fente (18) est réalisée en forme de coin entre les deux surfaces principales (12, 13).

11. Corps de carte (10) selon la revendication 10, **caractérisé en ce qu'**une ou deux contre-dépouilles (18f) sont prévues dans la zone d'une pointe de coin (18e) de la fente (18).

12. Carte à puce (30), comprenant un corps de carte (10) selon l'une quelconque des revendications 7 à 11 et un module de puce (31) au moins partiellement intégré dans l'ouverture de module (17) du corps de carte (10).
